# EUROPÄISCHE PATENTSCHRIFT

(11) **EP 2 404 339 B1**
(45) Veröffentlichungstag und Bekanntmachung des Hinweises auf die Patenterteilung: **09.04.2014**
(21) Anmeldenummer: 10706945.2
(22) Anmeldetag: 27.02.2010
(51) Int. Cl.: H01M 2/20

(54) **HOCHSTROMANSCHLUSSVORRICHTUNG FÜR ENERGIESPEICHER**
HIGH CURRENT CONNECTION DEVICE FOR ENERGY STORAGE
DISPOSITIF DE RACCORDEMENT À COURANT DE FORTE INTENSITÉ POUR ACCUMULATEUR D'ÉNERGIE

(30) Priorität: 05.03.2009 DE 102009011377
(43) Veröffentlichungstag der Anmeldung: 11.01.2012
(73) Patentinhaber: Amphenol-Tuchel Electronics GmbH, 74080 Heilbronnn (DE)
(72) Erfinder: LANGHOFF, Wolfgang, 71229 Leonberg (DE); BECK, Till, 74081 Heilbronn (DE)
(74) Vertreter: Schweiger, Johannes
(86) Internationale Anmeldenummer: PCT/EP2010/001234
(87) Internationale Veröffentlichungsnummer: WO 2010/099909

(56) Entgegenhaltungen:
- AT-U1- 9 790
- DE-A1- 10 101 050
- DE-A1- 19 810 746
- DE-A1-102007 020 295
- US-B1- 6 495 787

## Beschreibung

Die vorliegende Erfindung betrifft eine Hochstromanschlussvorrichtung zur parallelen und/oder seriellen Kontaktierung mehrerer Energiespeichereinheiten eines Energiespeichers nach Anspruch 1 sowie einen Energiespeicher nach Anspruch 12.

Solche Energiespeicher werden beispielsweise in Kraftfahrzeugen, insbesondere mit Elektro- oder Hybridantrieben eingesetzt. Die Energiespeicher bestehen üblicherweise aus mehreren Zellen, die elektrisch verbunden sind. Insbesondere für Hybridfahrzeuge müssen sehr viele Zellen sowohl parallel (zur Erhöhung der Kapazität) als auch seriell (zur Erhöhung der Spannung) verbunden werden. Bei der geforderten kompakten Bauart der Energiespeicher kommt es beim Betrieb des Energiespeichers zu erheblichen Temperaturschwankungen, zumal die Umgebungstemperatur bei Fahrzeugen ebenfalls erheblichen Schwankungen unterzogen ist. Darüber hinaus ändern die Zellen ihre geometrischen Außenabmessungen durch den jeweiligen Ladezustand.

Die Druckschrift AT 9790 U1 betrifft als nächstliegenden Stand der Technik ein Hochvoltbatterie mit einer Verbindereinheit in Form einer Leiterplatte. Die DE 10 2007 020 295 A1 betrifft eine Vorrichtung zum Speichern von elektrischer Energie. US 6,495,787 B1 betrifft ein elektrisches Verbindungssystem zwischen einer elektrochemischen Zelle und einer Leiterplatte. Die DE 101 01 050 A1 betrifft ein Signalführungssystem für ein Batteriepaket.

Daneben besteht das technische Problem, dass auf Grund der hohen Ströme beträchtliche Leitungsquerschnitte vorgesehen werden müssen.

Ein weiteres technisches Problem stellen die beim Betrieb von Fahrzeugen auftretenden Vibrationen und Stöße dar.

Durch die Verwendung unterschiedlicher Materialien zum Leiten des Stroms besteht außerdem das Problem elektrochemischer Vorgänge und technischer Schwierigkeiten beim Verbinden von solchen Bauteilen.

Der Erfindung liegt daher die Aufgabe zu Grunde, einen elektrischen Leiter sowie einen korrespondierenden Energiespeicher anzugeben, mit welchen trotz der vorgenanten technischen Problemstellungen ein sicherer Betrieb bei optimaler Materialverwertung und darüber hinaus einfacher Montage mit geringstmöglicher Fehleranfälligkeit gewährleistet wird.

Diese Aufgabe wird mit den Merkmalen der Ansprüche 1 und 12 gelöst. Vorteilhafte Weiterbildungen der Erfindung sind in den Unteransprüchen angegeben. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zu Grunde, die zum Anschluss von (Hochstrom-)Energiespeichern an einen Stromverbraucher erforderlichen Bauteile auf einer Platine beziehungsweise Leiterplatte vorkonfektioniert aufzubringen, damit ein Anschluss des Energiespeichers beziehungsweise der Energiespeicher bei der Montage stark vereinfacht wird. Es hat sich herausgestellt, dass durch diese Maßnahme und durch weitere Maßnahmen, die nachfolgend beschrieben werden, die oben beschriebenen technischen Probleme auf überraschend einfachem Wege lösen lassen. Denn auf einer Leiterplatte lässt sich einerseits eine Verdrahtungsstruktur einbinden und gleichzeitig können Leiterbahnen der Leiterplatte für weitere, in diesem Zusammenhang relevante Aspekte wie beispielsweise der Überwachung des Ladungszustandes beziehungsweise der Zellspannung implementiert werden.

Eine solche Hochstromanschlussvorrichtung weist demnach folgende Merkmale auf:
- zwei Pole zum Anschluss der Hochstromanschlussvorrichtung an einen Stromverbraucher,
- mindestens zwei Pluspolkontaktierungsanschlüsse zum Anschluss an Pluspole der Energiespeichereinheiten,
- mindestens zwei Minuspolkontaktierungsanschlüsse zum Anschluss an Minuspole der Energiespeichereinheiten,
- eine Leiterplatte zur Aufnahme der Pole, der Pluspolkontaktierungsanschlüsse und der Minuspolkontaktierungsanschlüsse, und
- jeder Pluspolkontaktierungsanschluss je einem Minuspolkontaktierungsanschluss und je einer Energiespeichereinheit zugeordnet ist.

Die zwei Pole können die Leiterplatte beispielsweise in einem Randbereich durchsetzen oder aus der Leiterplatte herausragen, und zwar beispielsweise als Hochstrompins oder -buchsen, an die korrespondierende Hochstromabnehmer auf einfache Art und Weise anschließbar sind.

In einer vorteilhaften Ausgestaltung der Erfindung sind die Energiespeichereinheiten als Akkuzellen und der Energiespeicher als Akkublock ausgebildet.

In einer weiteren Ausgestaltung der Erfindung sind die Pluspolkontaktierungsanschlüsse und/oder die Minuspolkontaktierungsanschlüsse als, insbesondere längliche, Streifen ausgestaltet. Als Streifen ausgestaltet haben die Kontaktierungsanschlüsse den Vorteil, auf einfache Art und Weise mit der Leiterplatte verbindbar zu sein. Darüber hinaus können durch die Ausbildung als Streifen hohe Stromstärken bei geringem Platzbedarf geleitet werden. Mit Vorteil sind die Pluspol- und/oder Minuspolkontaktierungsanschlüsse als eigenständige Bauteile auf der Leiterplatte aufgebracht beziehungsweise aufbringbar.

Als Querschnitt der Kontaktierungsanschlüsse für eine typische Energiespeichereinheit ist eine Breite von 5 bis 20 mm, vorzugsweise 10 mm, und eine Materialdicke von 1 mm bis 3 mm, vorzugsweise 1,5 mm bis 2,5 mm, vorgesehen. Durch die längliche Ausgestaltung ist es außerdem möglich, die Kontaktierungsanschlüsse, beispielsweise durch Laserschweißen, stabil mit korrespondierenden Anschlüssen an den Energiespeichereinheiten zu fixieren, so dass die oben angesprochenen Vibrationen und Größenänderungen nicht dazu führen, dass elektrische Verbindungen während des Betriebs gelöst werden.

Mit Vorteil sind die Pluspolkontaktierungsanschlüsse aus einem von den Minuspolkontaktierungsanschlüssen verschiedenen Material gebildet, insbesondere aus Kupfer oder Aluminium, damit beim Anschluss der korrespondierenden Pole der Energiespeichereinheiten keine unerwünschten elektrochemischen Vorgänge beziehungsweise technische Probleme beim Verbinden der Bauteile auftreten.

Indem die Pluspolkontaktierungsanschlüsse und die Minuspolkontaktierungsanschlüsse in je einem Überlappungsabschnitt überlappend angeordnet sind, lassen sich die Pluspolkontaktierungsanschlüsse und die Minuspolkontaktierungsanschlüsse auf einfache Art und Weise über eine große Fläche elektrisch leitend verbinden und auch hier ist wiederum sichergestellt, dass ein Lösen der Verbindung während des Betriebs auf Grund von Vibrationen oder Temperaturschwankungen nicht erfolgt. Soweit hier die Materialpaarung der Pluspolkontaktierungsanschlüsse und der Minuspolkontaktierungsanschlüsse im Stand der Technik zu Problemen führt, kann durch das Vorsehen eines Überlappungsabschnittes und das Vorkonfektionieren eine auf die jeweilige Materialpaarung abgestimmte Verbindung realisiert werden, wobei die Minuspolkontaktierungsanschlüsse und die Pluspolkontaktierungsanschlüsse bereits vor der Verbindung mit der Leiterplatte vorkonfektioniert werden können, insbesondere automatisiert. Bei einer Materialpaarung von Aluminium und Kupfer kann beispielsweise eine Ultraschallschweißung mit Vorteil vorgesehen sein.

In einer weiteren, vorteilhaften Ausführungsform der Erfindung ist vorgesehen, dass die Pluspolkontaktierungsanschlüsse und/oder Minuspolkontaktierungsanschlüsse, insbesondere außerhalb des Überlappungsabschnitts, je einen, vorzugsweise gegenüber dem Überlappungsabschnitt angewinkelten, Kontaktierungsbereich zur Kontaktierung der Pluspole und/oder Minuspole der Energiespeichereinheiten aufweisen. Auf diese Art und Weise müssen für die Kontaktierung der Energiespeichereinheiten keine weiteren Bauteile gesondert vorgesehen sein und die oben beschriebenen Vorteile gelten auch hier, beispielsweise die einfache Fixierung der Pluspole und/oder Minuspole, beispielsweise durch Laserschweißen.

Soweit die Polkontaktierungsanschlüsse, insbesondere im Bereich der Überlappungsabschnitte, durch Fixiermittel an der Leiterplatte fixiert sind, vorzugsweise durch eine Lötverbindung, kann auch eine innige Verbindung der als gesonderte Bauteile vorgesehenen Polkontaktierungsanschlüsse mit der Leiterplatte realisiert werden, damit Temperaturschwankungen und Vibrationen der Hochstromanschlussvorrichtung nichts anhaben können.

Die Polkontaktierungsanschlüsse sind im Querschnitt U-förmig ausgebildet, wobei die Kontaktierungsbereiche Schenkel und der Überlappungsabschnitt einen Boden der Polkontaktierungsanschlüsse bilden. Damit sind die Pluspole und/oder Minuspole der Energiespeichereinheiten durch in der Leiterplatte vorgesehene Schlitze von der Rückseite der Leiterplatte her auf einfache Art und Weise einschiebbar, und zwar parallel zu den Schenkeln. Mit Vorteil kann bereits auf Grund der Geometrie eine zumindest vorläufige Kontaktierung der Pluspole und/oder Minuspole an die Schenkel der Polkontaktierungsanschlüsse erfolgen. Diese kann zusätzlich mechanisch und/oder durch Schweißung fixiert werden.

Ein optionaler Aspekt der Erfindung ist es, das die Hochstromanschlussvorrichtung mit einem Überwachungsmittel beziehungsweise mit Überwachungsmitteln zum Abgriff von Parametern, insbesondere der Zellspannung, an einem oder mehreren der Polkontaktierungsanschlüsse ausstattbar beziehungsweise ausgestattet ist. Die Überwachungsmittel sind mit Vorteil in die Leiterplatte integriert, insbesondere als Schaltkreise der Leiterplatte beziehungsweise als Leiterbahnen der Leiterplatte. Damit kann die Leiterplatte gleichzeitig als Struktur für die Kontaktierung der Energiespeichereinheiten und zur Überwachung von Parametern der Energiespeichereinheiten beziehungsweise des Energiespeichers eingesetzt werden. Mit Vorteil weist das Überwachungsmittel eine Schnittstelle zum Anschluss einer Auswerteeinheit zur Auswertung und gegebenenfalls Regelung des Energiespeichers auf, wobei der Anschluss als Buchse ausgebildet sein kann.

Mit Vorteil weist das Überwachungsmittel in die Leiterplatte geätzte oder auf die Leiterplatte aufgedruckte Leiterbahnen auf, die an Überwachungsanschlüsse der Polkontaktierungsanschlüsse angeschlossen beziehungsweise anschließbar sind. Soweit der Zellspannungsabgriff beziehungsweise der Abgriff der Parameter an einem aus Kupfer bestehenden Bauteil der Polkontaktierungsanschlüsse erfolgt, kann dieser besonders genau sein, da für eine Steuerung/Regelung des Energiespeichers eine hochgenaue Messung von Vorteil ist.

Soweit die Überwachungsanschlüsse gleichzeitig die Fixiermittel bilden, lässt sich durch die Fixiermittel gleichzeitig eine weitere Funktion realisieren, zumal die Fixiermittel ohnehin an der Leiterplatte befestigt werden und dort mit entsprechenden Leiterbahnen der Leiterplatte in Kontakt gebracht werden können.

In einer weiteren vorteilhaften Ausführungsform der Erfindung ist vorgesehen, dass die Pluspolkontaktierungsanschlüsse und/oder die Minuspolkontaktierungsanschlüsse jeweils entweder seriell und/oder parallel elektrisch kontaktiert sind. Je nach Anforderungsprofil der Stromstärke und Spannung, die vom Energiespeicher zur Verfügung gestellt werden soll, lässt sich mit der erfindungsgemäßen Hochstromanschlussvorrichtung auf einfache Art und Weise eine Vielzahl von Möglichkeiten realisieren.

Erfindungsgemäß ist außerdem ein Energiespeicher vorgesehen, insbesondere für Hybridfahrzeuge, bestehend aus mehreren Energiespeichereinheiten, wobei die Energiespeichereinheiten durch eine Hochstromanschlussvorrichtung nach einem der vorhergehenden Ansprüche parallel und/oder seriell miteinander elektrisch verbunden sind. Ein weiterer Aspekt der Erfindung, der mit dem vorgenannten Energiespeicher kombinierbar ist, ist es, dass der Energiespeicher über die Hochstromanschlussvorrichtung an einem Stromverbraucher anschließbar ist.

Weitere Vorteile, Merkmale und Einzelheiten der Erfindung ergeben sich aus der Beschreibung bevorzugter Ausführungsbeispiele sowie an Hand der Zeichnung. Diese zeigt in:

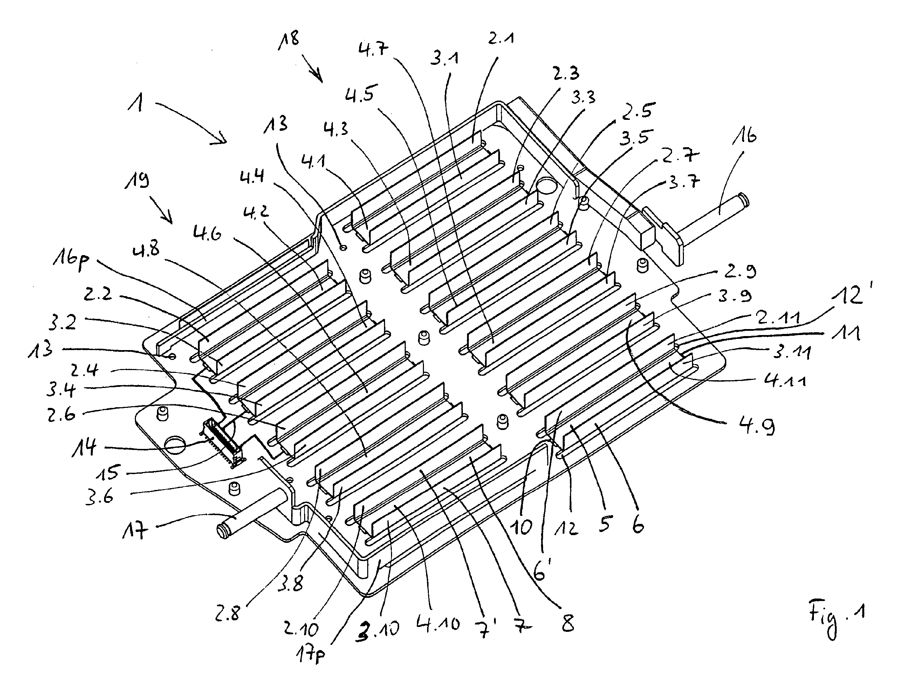

- Fig. 1:: eine perspektivische Aufsicht auf eine erfindungsgemäße Hochstromanschlussvorrichtung.

Figur 1 zeigt eine Hochstromanschlussvorrichtung 1 mit aus Pluspolkontaktierungsanschlüssen 2.1, 2.2, 2.3, 2.4, 2.5, 2.6, 2.7, 2.8, 2.9, 2.10, 2.11 und Minuspolkontaktierungsanschlüssen 3.1, 3.2, 3.3, 3.4, 3.5, 3.6, 3.7, 3.8, 3.9, 3.10, 3.11 bestehenden Polkontaktierungsanschlüssen 4.1, 4,2, 4.3, 4.4, 4.5, 4.6, 4.7, 4.8, 4.9, 4.10, 4.11. Die Polkontaktierungsanschlüsse 4.1 bis 4.11 sind in zwei Reihen 18, 19 derart versetzt angeordnet, dass jeweils ein Pluspolkontaktierungsanschluss der Reihe 18 mit einem Minuspolkontaktierungsanschluss der Reihe 19 fluchtend ausgerichtet ist, beispielsweise der Pluspolkontaktierungsanschluss 2.2 mit dem Minuspolkontaktierungsanschluss 3.1.

Die Energiespeichereinheiten (nicht dargestellt) sind bei der gezeigten Ausführungsform derart angeordnet, dass sie eine einzige Reihe unterhalb der Leiterplatte 9 bilden, und zwar parallel zu der Längserstreckung der Polkontaktierungsanschlüsse 4.1 bis 4.11. Die in der Figur 1 zuhinterst angeordnete Energiespeichereinheit kontaktiert demnach mit Ihrem Pluspol aus Kupfer oder Stahl (nicht dargestellt) den Pluspolkontaktierungsanschluss 2.1 aus Kupfer und mit Ihrem Minuspol aus Aluminium (nicht dargestellt) einen Polanschluss 16p, der zum Pol 16 elektrisch leitend führt. Der Polanschluss 16b ist in für den hohen Strom erforderlichem Querschnitt vorzusehen.

Der Minuspolkontaktierungsanschluss 3.1 aus Aluminium kontaktiert wiederum den Minuspol der nächsten Energiespeichereinheit, während der Pluspol dieser Energiespeichereinheit mit dem Pluspolkontaktierungsanschluss 2.2 verbunden beziehungsweise fixiert ist, insbesondere durch Laserschweißen. Der Pluspolkontaktierungsanschluss 2.2 und der Minuspolkontaktierungsanschluss 3.1 sind fluchtend ausgerichtet. Die benachbarten Energiespeichereinheiten sind zueinander gedreht, also abwechselnd Pluspol links und Pluspol rechts.

Entsprechend ergibt sich bei dieser Ausführungsform eine serielle Schaltung von dem Minuspol der ersten Energiespeichereinheit, die am Pol 16 angeschlossen ist bis zum Pluspol der in Figur 1 zuvorderst liegenden Energiespeichereinheit (nicht dargestellt). Dieser ist über einen Polanschluss 17b elektrisch leitend mit dem Pol 17 verbunden.

Der Minuspol der zuvorderst liegenden Energiespeichereinheit ist - analog allen anderen Polen der Energiespeichereinheiten - von unten durch einen Schlitz 12 an den Minuspolkontaktierungsanschluss 3.11 angeschlossen.

Die Polkontaktierungsanschlüsse 4.1 bis 4.11 sind U-förmig ausgebildet, bestehend aus einem Boden 5 und zwei Schenkeln 6, 6'. Die Pluspolkontaktierungsabschnitte 2.1 bis 2.11 und die Minuspolkontaktierungsabschnitte 3.1 bis 3.11 sind jeweils L-förmig im Querschnitt und bestehen jeweils aus einem Kontaktierungsbereich 7, 7' und einem Überlappungsabschnitt 8. Im Überlappungsabschnitt 8, der den Boden 5 der Polkontaktierungsanschlüsse 4.1 bis 4.11 bildet, überlappen die Pluspolkontaktierungsanschlüsse 2.1 bis 2.11 und die Minuspolkontaktierungsanschlüsse 3.1 bis 3.11. Die jeweils zugehörigen Pluspolkontaktierungsanschlüsse 2.1 und Minuspolkontaktierungsanschlüsse 3.1 beziehungsweise 2.2 und 3.2 usw. werden im Überlappungsabschnitt 8 durch Ultraschallschweißen verbunden, da die Pluspolkontaktierungsanschlüsse 2.1 bis 2.11 und die Minuspolkontaktierungsanschlüsse 3.1 bis 3.11 aus unterschiedlichen Materialien, nämlich insbesondere Kupfer und Aluminium, gebildet sind.

Die Polkontaktierungsanschlüsse 4.1 bis 4.11 sind auf einer Leiterplatte 9 fixiert, und zwar durch eine Lötverbindung, beispielsweise an den beiden Längsenden 10, 11 jedes Polkontaktierungsanschlusses 4.1 bis 4.11. Zur Kontaktierung der Kontaktierungsbereiche 7, 7' mit den korrespondierenden Pluspolen/Minuspolen der Energiespeichereinheiten, die von unten an die Hochstromanschlussvorrichtung 1 angeschlossen werden, sind Schlitze 12, 12' in die Leiterplatte 9 eingebracht, insbesondere eingefräst, durch die entsprechend ausgebildete Pluspole/Minuspole der Energiespeichereinheiten steckbar sind.

Die Schlitze 12, 12' sind parallel fluchtend zu dem jeweils zugeordneten Kontaktierungsbereich 7, 7' neben dem jeweiligen Polkontaktierungsanschluss 4.1 bis 4.11 angeordnet, damit die Pluspole/Minuspole möglichst bereits beim Durchstecken mit den korrespondierenden Kontaktierungsbereichen 7, 7' in Kontakt treten. Die Verbindung zwischen den Kontaktierungsbereichen 7, 7' und den Pluspolen/Minuspolen der Energiespeichereinheiten erfolgt beispielsweise durch Laserschweißen entlang der Längserstreckung des Kontaktierungsbereiches 7, 7'.

Um Temperaturschwankungen und sonstige Größenänderungen zerstörungsfrei zuzulassen, überragen die Schlitze 12, 12' die Polkontaktierungsanschlüsse 4.1 bis 4.1 an deren Längsenden 10, 11 geringfügig.

Zur zusätzlichen Fixierung der Polkontaktierungsanschlüsse 4.1 bis 4.1 können Niederhalter (nicht dargestellt) in Öffnungen 13 in der Leiterplatte 9 eingesteckt werden.

Von jedem Polkontaktierungsanschluss 4.1 bis 4.11 führen Leiterbahnen 15 der Leiterplatte 9 zu einem Überwachungsanschluss 14, der als Buchse ausgeführt ist. Die Leiterbahnen 15 greifen an dem jeweils zugeordneten Polkontaktierungsanschluss 4.1 bis 4.11 Parameter wie beispielsweise die Zellspannung beziehungsweise den Ladezustand der jeweiligen Energiespeichereinheit ab und die Parameter werden durch eine am Überwachungsanschluss 14 angeschlossene beziehungsweise anschließbare Auswerteinheit ausgewertet und zur Steuerung/Regelung des Energiespeichers verwendet.

### Bezugszeichenliste

- 1: Hochstromanschlussvorrichtung
- 2.1 bis 2.11: Pluspolkontaktierungsanschlüsse
- 3.1 bis 3.11: Minuspolkontaktierungsanschlüsse
- 4.1 bis 4.11: Polkontaktierungsanschlüsse
- 5: Boden
- 6, 6': Schenkel
- 7, 7': Kontaktierungsbereich
- 8: Überlappungsabschnitt
- 9: Leiterplatte
- 10, 11: Längsenden
- 12, 12': Schlitze
- 13: Öffnungen
- 14: Überwachungsanschluss
- 15: Leiterbahnen
- 16: Pol
- 16p: Polanschluss
- 17: Pol
- 17p: Polanschluss
- 18: Reihe
- 19: Reihe

## Patentansprüche

1. Hochstromanschlussvorrichtung (1) zur parallelen und/oder seriellen Kontaktierung mehrerer Energiespeichereinheiten eines Energiespeichers mit folgenden Merkmalen:
- zwei Pole (16, 17) zum Anschluss der Hochstromanschlussvorrichtung (1) an einen Stromverbraucher,
- mindestens zwei Pluspolkontaktierungsanschlüsse (2.1 bis 2.11) zum Anschluss an Pluspole der Energiespeichereinheiten,
- mindestens zwei Minuspolkontaktierungsanschlüsse (3.1 bis 3.11) zum Anschluss an Minuspole der Energiespeichereinheiten,
- eine Leiterplatte (9) zur Aufnahme der Pole, der Pluspolkontaktierungsanschlusse (2.1 bis 2.11) und der Minuspolkontaktierungsanschlüsse (3.1 bis 3.11), und
- jeder Pluspolkontaktierungsanschluss (2.1 bis 2.11) je einem Minuspolkontaktierungsanschluss (3.1 bis 3.11) und je einer Energiespeichereinheit zugeordnet ist, wobei die Pluspolkontaktierungsanschlüsse (2.1 bis 2.11) und die Minuspolkontaktierungsanschlüsse (3.1 bis 3.11) in je einem Überlappungsabschnitt (8) überlappend angeordnet und jeweils elektrisch leitend verbunden sind zu Polkontaktierungsanschlüssen (4.1 bis 4.11) und die Pluspolkontaktierungsanschlüsse (2.1 bis 2.11) und/oder die Minuspolkontaktierungsanschlüsse (3.1 bis 3.11) je einen Kontaktierungsbereich (7, 7') zur Kontaktierung der Pluspole und/oder Minuspole der Energiespeichereinheiten aufweisen, und wobei die Polkontaktierungsanschlüsse (4.1 bis 4.11) im Querschnitt U-förmig ausgebildet sind, wobei die Kontaktierungsbereiche (7, 7') Schenkel (6, 6') und der Überlappungsabschnitt (8) einen Boden der Polkontaktierungsanschlüsse (4.1 bis 4.11) bilden.

2. Hochstromanschlussvorrichtung (1) nach einem der vorherigen Ansprüche, bei der die Energiespeichereinheiten als Akkuzellen und der Energiespeicher als Akkublock ausgebildet sind.

3. Hochstromanschlussvorrichtung (1) nach einem der vorherigen Ansprüche, bei der die Pluspolkontaktierungsanschlüsse (2.1 bis 2.11) und/oder die Minuspolkontaktierungsanschlüsse (3.1 bis 3.11) als, insbesondere längliche, Streifen ausgestaltet sind.

4. Hochstromanschlussvorrichtung (1) nach einem der vorherigen Ansprüche, bei der die Pluspolkontaktierungsanschlüsse (2.1 bis 2.11) aus Kupfer und die Minuspolkontaktierungsanschlüsse (3.1 bis 3.11) aus Aluminium gebildet sind oder umgekehrt.

5. Hochstromanschlussvorrichtung (1) nach Anspruch 1, bei der die Pluspolkontaktierungsanschlüsse (2.1 bis 2.11) und die Minuspolkontaktierungsanschlüsse (3.1 bis 3.11) im jeweiligen Überlappungsabschnitt (8) jeweils durch Ultraschallschweißen elektrisch leitend verbunden sind zu Polkontaktierungsanschlüssen (4.1 bis 4.11).

6. Hochstromanschlussvorrichtung (1) nach einem der vorherigen Ansprüche, bei der der Kontaktierungsbereich gegenüber dem Überlappungsabschnitt (8) angewinkelt ist.

7. Hochstromanschlussvorrichtung (1) nach Anspruch 5, bei der die Polkontaktierungsanschlüsse (4.1 bis 4.11), insbesondere im Bereich der Überlappungsabschnitte (8), durch Fixiermittel an der Leiterplatte (9) fixiert sind, vorzugsweise durch eine Lötverbindung.

8. Hochstromanschlussvorrichtung (1) nach einem der vorherigen Ansprüche mit einem, insbesondere in die Leiterplatte (9) integrierten, Überwachungsmittel zum Abgriff von Parameteren, insbesondere der Zellspannung, an einem oder mehreren der Polkontaktierungsanschlüsse (4.1 bis 4.11).

9. Hochstromanschlussvorrichtung (1) nach Anspruch 8, bei der die Überwachungsmittel (8) in die Leiterplatte (9) geätzte oder auf die Leiterplatte (9) aufgedruckte Leiterbahnen (15) aufweist, die an Überwachungsanschlüsse (14) der Polkontaktierungsanschlüsse (4.1 bis 4.11), vorzugsweise an aus Kupfer gebildete Bauteile der Polkontaktierungsanschlüsse (4.1 bis 4.11), angeschlossen sind.

10. Hochstromanschlussvorrichtung (1) nach Anspruch 9, bei der die Überwachungsanschlüsse (8) gleichzeitig die Fixiermittel bilden.

11. Hochstromanschlussvorrichtung (1) nach einem der vorherigen Ansprüche, bei der die Pluspolkontaktierungsanschlüsse (2.1 bis 2.11) und/oder die Minuspolkontaktierungsanschlüsse (3.1 bis 3.11) jeweils entweder seriell und/oder parallel elektrisch kontaktiert sind.

12. Energiespeicher, insbesondere für Hybridfahrzeuge, bestehend aus mehreren Energiespeichereinheiten, wobei die Energiespeichereinheiten durch eine Hochstromanschlussvorrichtung (1) nach einem der vorhergehenden Ansprüche parallel und/oder seriell miteinander elektrisch verbunden sind, und/oder wobei der Energiespeicher über die Hochstromanschlussvorrichtung (1) an einen Stromverbraucher anschließbar ist.

## Claims

1. High current connection device (1) for parallel and/or serial contact-making of several energy storage units of an energy storage with the following features:
- two terminals (16, 17) for connecting the high current connection device (1) to a current consumer,
- at least two positive terminal contact-making connections (2.1 to 2.11) for connection to positive terminals of the energy storage units,
- at least two negative terminal contact-making connections (3.1 to 3.11) for connection to negative terminals of the energy storage units,
- a circuit board (9) for accommodating the terminals, the positive terminal contact-making connections (2.1 to 2.11) and the negative terminal contact-making connections (3.1 to 3.11) and
- each positive terminal contact-making connection (2.1 to 2.11) is assigned to one negative terminal contact-making connection (3.1 to 3.11) at a time and to one energy storage unit at a time, wherein the positive terminal contact-making connections (2.1 to 2.11) and the negative terminal contact-making connections (3.1 to 3,11) are arranged overlapping in one overlapping section (8) at a time and are each electrically connected to the terminal contact-making connections (4.1 to 4.11) and the positive terminal contact-making connections (2.1 to 2.11) and/or the negative terminal contact-making connections (3.1 to 3.11) each have one contact-making region (7,7') for contact-making of the positive terminals and/or negative terminals of the energy storage units, and wherein the terminal contact-making connections (4.1 to 4.11) are made U-shaped in cross section, the contact-making regions (7,7') Forming legs (6, 6') and the overlapping section (8) forming a bottom of the terminal contact-making connections (4.1 to 4.11).

2. High current connection device (1) as claimed in one of the preceding claims, wherein the energy storage units are made as battery cells and the energy storage is made as a battery block.

3. High current connection device (1) as claimed in one of the preceding claims, wherein the positive terminal contact-making connections (2.1 to 2.11) and the negative terminal contact-making connections (3.1 to 3.11) are made as especially oblong strips.

4. High current connection device (1) as claimed in one of the preceding claims, wherein the positive terminal contact-making connections (2.1 to 2.11) are formed from copper and the negative terminal contact-making connections (3.1 to 3.11) are formed from aluminum or vice versa.

5. High current connection device (1) as claimed in Claim 4, wherein the positive terminal contact-making connections (2.1 to 2.11) and/or the negative terminal contact-making connections (3.1 to 3.11) are connected by ultrasonic welding in an electrically conductive manner in the respective overlapping section (8) into terminal contact-making connections (4.1 to 4.11).

6. High current connection device (1) as claimed in one of the preceding claims, wherein the contact making region is angled relative to the overlapping section (8).

7. High current connection device (1) as claimed in Claim 5, wherein the terminal contact-making connections (4.1 to 4.11 especially in the region of the overlapping sections (8), are fixed by fixing means on the circuit board (9), preferably by a solder connection.

8. High current connection device (1) as claimed in one of the preceding claims with a monitoring means which has been integrated into the circuit board (9) for tapping of parameters, especially the cell voltage, on one or more of the terminal contact-making connections (4.1 to 4.11).

9. High current connection device (1) as claimed in Claim 8, wherein the monitoring means (8) has printed conductors (15) which are printed onto the circuit board (9) or etched into the circuit board (9) and which are connected to monitoring connections (14) of the terminal contact-making connections (4.1 to 4.11), preferably to copper components of the terminal contact-making connections (4.1 to 4.11).

10. High current connection device (1) as claimed in Claim 9, wherein the monitoring connections (8) at the same time form the fixing means.

11. High current connection device (1) as claimed in one of the preceding claims, wherein the positive terminal contact-making connections (2.1 to 2.11) and/or the negative terminal contact-making connections (3.1 to 3.11) make electrical contact either in series and/or in parallel.

12. Energy storage, especially for hybrid vehicles, consisting of several energy storage units, the energy storage units being electrically connected to one another in series and/or in parallel by a high current connection device (1) as claimed in one of the preceding claims, and/or the energy storage can be connected to a current consumer via the high current connection device (1).

## Revendications

1. Dispositif de connexion à courant de forte intensité (1) pour connexion parallèle et/ou en série de plusieurs unités d'accumulation d'énergie d'un accumulateur d'énergie avec les caractéristiques suivantes :
- deux pôles (16, 17) pour branchement du dispositif de connexion à courant de forte intensité (1) à un consommateur de courant,
- au moins deux raccords de connexion à pôle positif (2.1 à 2.11) pour le branchement à des pôles positifs des unités d'accumulation d'énergie,
- au moins deux raccords de connexion à pôle négatif (3.1 à 3.11) pour le branchement à des pôles négatifs des unités d'accumulation d'énergie,
- une plaquette à circuits imprimés (9) pour recevoir les pôles, les raccords de connexion à pôle positif (2.1 à 2.11) et les raccords de connexion à pôle négatif (3.1 à 3.11) et
- chaque raccord de connexion à pôle positif (2.1 à 2.11) chacun étant attribué à un raccord de connexion à pôle négatif (3.1 à 3.11) et à une unité d'accumulation d'énergie, les raccords de connexion à pôle positif (2.1 à 2.11) et les raccords de connexion à pôle négatif (3.1 à 3.11) étant disposés en chevauchement à chaque fois dans une section de chevauchement (8) et reliés respectivement de manière électroconductrice aux raccords de connexion polaires (4.1 à 4.11) et les raccords de connexion à pôle positif (2.1 à 2.11) et/ou les raccords de connexion à pôle négatif (3.1 à 3.11) présentant à chaque fois une zone de connexion (7, 7') pour connecter les pôles positifs et/ou les pôles négatifs des unités d'accumulation d'énergie et les raccords de connexion polaires (4.1 à 4.11) étant constitués en section en forme de U, les zones de connexion (7, 7') formant des branches (6, 6') et la section de chevauchement (8) un fond des raccords de connexion polaires (4.1 à 4.11).

2. Dispositif de connexion à courant de forte intensité (1) selon une quelconque des revendications précédentes pour lequel les unités d'accumulation d'énergie sont constituées en tant qu'éléments d'accumulateur et l'accumulateur d'énergie en tant que bloc d'accumulateur.

3. Dispositif de connexion à courant de forte intensité (1) selon une quelconque des revendications précédentes pour lequel les raccords de connexion à pôle positif (2.1 à 2.11) et/ou les raccords de connexion à pôle négatif (3.1 à 3.11) sont conçus en tant que bandes, en particulier longitudinales.

4. Dispositif de connexion à courant de forte intensité (1) selon une quelconque des revendications précédentes pour lequel les raccords de connexion à pôle positif (2.1 à 2.11) sont constitués en cuivre et les raccords de connexion à pôle négatif (3.1 à 3.11)en aluminium ou inversement.

5. Dispositif de connexion à courant de forte intensité (1) selon la revendication 1 pour lequel les raccords de connexion à pôle positif (2.1 à 2.11) et les raccords de connexion à pôle négatif (3.1 à 3.11) son reliés dans la section de chevauchement (8) respective de façon électroconductrice, à chaque fois par soudage par ultrasons aux raccords de connexion polaires (4.1 à 4.11).

6. Dispositif de connexion à courant de forte intensité (1) selon une quelconque des revendications précédentes pour lequel la zone de connexion est pliée vis-à-vis de la section de chevauchement (8).

7. Dispositif de connexion à courant de forte intensité (1) selon la revendication 5 pour lequel les raccords de connexion polaires (4.1 à 4.11), en particulier dans la zone des sections de chevauchement (8) sont fixés par un moyen de fixation à la plaquette à circuits imprimés (9), de préférence par un assemblage par soudure.

8. Dispositif de connexion à courant de forte intensité (1) selon une quelconque des revendications précédentes avec un moyen de surveillance intégré, en particulier dans la plaquette à circuits imprimés (9), pour capter des paramètres, en particulier de la tension d'élément, sur un ou plusieurs des raccords de connexion polaires (4.1 à 4.11).

9. Dispositif de connexion à courant de forte intensité (1) selon la revendication 8 pour lequel les moyens de surveillance (8) présentent des circuits conducteurs gravés dans la plaquette à circuits imprimés (9) ou imprimés sur la plaquette à circuits imprimés qui sont raccordés aux connexions de surveillance (14) des raccords de connexion polaires (4.1 à 4.11), de préférence aux composants formés en cuivre des raccords de connexion polaires (4.1 à 4.11).

10. Dispositif de connexion à courant de forte intensité (1) selon la revendication 9 pour lequel les connexions de surveillance (8) forment simultanément les moyens de fixation.

11. Dispositif de connexion à courant de forte intensité (1) selon une quelconque des revendications précédentes pour lequel les raccords de connexion à pôle positif (2.1 à 2.11) et/ou les raccords de connexion à pôle négatif (3.1 à 3 ; 11) sont à chaque fois connectés électriquement soit en série et/ou en parallèle.

12. Accumulateur d'énergie, en particulier pour véhicules hybrides, composé de plusieurs unités d'accumulation d'énergie, les unités d'accumulation d'énergie étant reliées électriquement entre elles parallèlement et/ou en série par un dispositif de connexion à courant de forte intensité (1) selon une quelconque des revendications précédentes et/ou l'accumulateur d'énergie pouvant être connecté par le dispositif de connexion à courant de forte intensité (1)à un consommateur de courant.
